# EUROPÄISCHE PATENTANMELDUNG

(11) **EP 0 926 802 A2**
(43) Veröffentlichungstag der Anmeldung: **30.06.1999**
(21) Anmeldenummer: 98811041.7
(22) Anmeldetag: 19.10.1998
(51) Int. Cl.: H02K 3/50

(54) **Elektrische Maschine mit einem verspannten Wickelkopf**

(30) Priorität: 15.12.1997 DE 19755569
(71) Anmelder: Asea Brown Boveri AG, 5401 Baden (CH)
(72) Erfinder: de Pietro, Rolf, 5102 Rupperswil (CH); Kopp, Albert, 5210 Windisch (CH)
(74) Vertreter: Lück, Gert, Dr.

(57) **Zusammenfassung**

Bei einer elektrische Maschine (10), insbesondere Generator oder Motor, welche in einem Maschinengehäuse (11) untergebracht ist und eine durch einen Statorkern (13) hindurchlaufende Statorwicklung umfasst, die stirnseitig in einen Wickelkopf (31) übergeht, welcher zum Auffangen dynamischer Belastungen verspannt gelagert ist, wird ein flexibles Nachstellen dadurch erreicht, dass an der Wickelkopflagerung Mittel (20, 21, 29, 30) zum Nachspannen des Wickelkopfes (31) vorgesehen sind, welche von ausserhalb des Maschinengehäuses (11) betätigbar sind und ein Nachspannen während des Betriebes ermöglichen.

## Beschreibung

### TECHNISCHES GEBIET

Die vorliegende Erfindung bezieht sich auf das Gebiet der elektrischen Maschinen. Sie betrifft eine elektrische Maschine, insbesondere Generator oder Motor, welche elektrische Maschine in einem Maschinengehäuse untergebracht ist und eine durch einen Statorkern hindurchlaufende Statorwicklung umfasst, die stirnseitig in einen Wickelkopf übergeht, welcher zum Auffangen dynamischer Belastungen verspannt gelagert ist.

Eine solche elektrische Maschine ist z.B. aus der Druckschrift EP-B1-0 432 720 bekannt.

### STAND DER TECHNIK

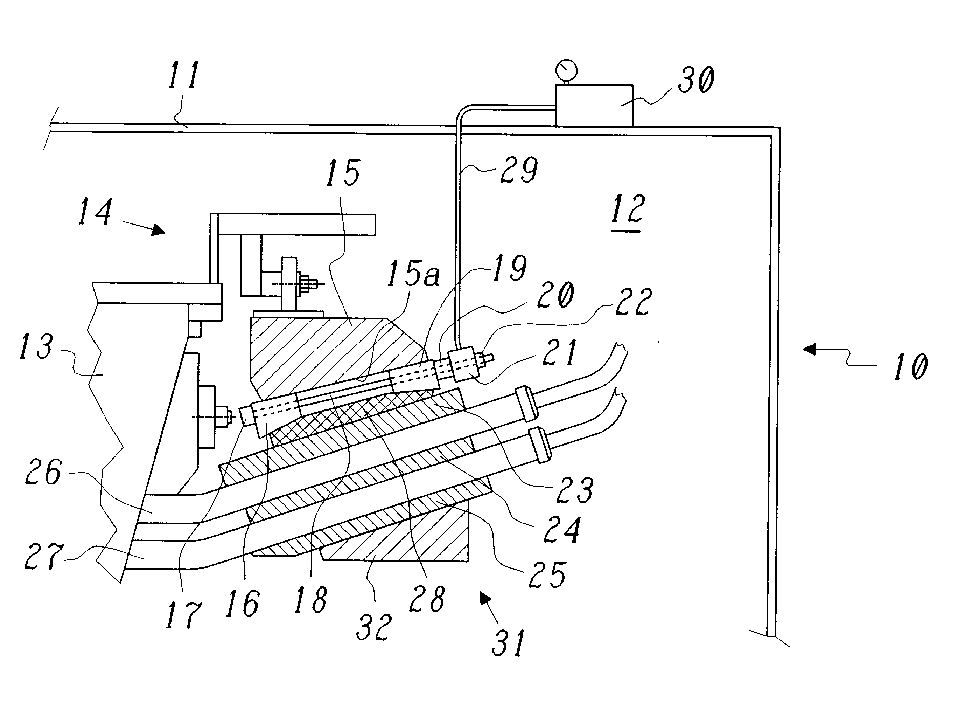

Bei Statorwickelköpfen grosser elektrischer Maschinen wie z.B. Turbogeneratoren mit direkt H₂-gekühlter Statorwicklung treten während des Betriebes hohe dynamische Beanspruchungen auf, die dadurch aufgefangen und unschädlich gemacht werden sollen, dass die Wickelköpfe auf geeignete Weise gelagert und in der Lagerung verspannt gehalten werden. In der eingangs genannten Druckschrift wird eine Verspannung vorgeschlagen, bei welcher der Wickelkopf auf einem Innenring aufliegt und durch geeignete Verspannungsmittel gegen den Innenring gepresst wird. Als Verspannungsmittel werden im Zusammenhang mit der dortigen Fig. 4 Paare von Spannkeilen (16a,b) vorgeschlagen, die auf eine Spannplatte (Uebertrager 15a) drücken und sich auf der Innenseite eines am Statorkern befestigten Abstützelementes (Winkel 13a) abstützen. Die Spannkeile lassen sich mittels einer gemeinsamen Spannschraube aufeinander zu bewegen und pressen so die Spannplatte gegen den Wickelkopf.

Nachteilig ist bei dieser Art der Verspannung, dass sie aufwendig in der Einstellung und unflexibel in der Handhabung ist. Aendern sich während des Betriebes der Maschine durch die auftretenden Belastungen die mechanischen Vorspannungen bzw. die Lagerungsgeometrie des Wickelkopfes, können diese Aenderungen nur dadurch kompensiert werden, dass die Maschine abgestellt, das Maschinengehäuse geöffnet und die Verschraubungen (der Spannkeile) im Bereich der Wickelkopflagerung in geeigneter Weise nachgezogen werden. Problematisch sind bei einer solchen Wartung einerseits die nicht unbeträchtlichen Ausfallzeiten der Maschine, die neben dem eigentlichen Wartungsaufwand zu Buche schlagen. Andererseits ist aber auch das Nachregulieren der Verspannung selbst problematisch, weil die Wirkung der Nachregulierung mit letzter Sicherheit nur bei laufender Maschine überprüft werden kann, was letztendlich zu einem mehrmaligen Abstellen und Anfahren der Maschine führt.

### DARSTELLUNG DER ERFINDUNG

Es ist daher Aufgabe der Erfindung, eine Maschine der eingangs genannten Art so umzugestalten, dass die oben genannten Nachteile beseitigt werden, und ein konstruktiv und funktionell einfaches, schnelles und genaues Nachstellen der Wickelkopflagerung möglich wird.

Die Aufgabe wird bei einer Maschine der eingangs genannten Art dadurch gelöst, dass an der Wickelkopflagerung Mittel zum Nachspannen des Wickelkopfes vorgesehen sind, welche von ausserhalb des Maschinengehäuses betätigbar sind und ein Nachspannen während des Betriebes ermöglichen. Durch die erfindungsgemässen von aussen bedienbaren Nachspannmittel wird es möglich, das Nachspannen durchzuführen, ohne dass das Maschinengehäuse geöffnet werden muss. Hierdurch ergeben sich bereits erhebliche Zeiteinsparungen. Da das Nachspannen aber auch während des Betriebes der Maschine durchgeführt werden kann, lässt sich die Wartungszeit weiter reduzieren und ein Stillstand der Maschine vermeiden. Insbesondere kann während des Nachspannens z.B. durch Einsatz geeigneter Diagnosemittel wie Vibrations-Sensoren direkt der Effekt des Nachspannens nachgeprüft werden. Weiterhin lässt sich mit den "fernbedienbaren" Nachspannmitteln besonders einfache eine gleichmässige Vorspannung aller Abstützungen der Wickelkopflagerung realisieren.

Eine erste bevorzugte Ausführungsform der Erfindung ist dadurch gekennzeichnet, dass der Wickelkopf auf einem koaxial zur Maschinenachse angeordneten Innenring aufliegt, und aussen von am Statorkern befestigten Abstützelementen umgeben ist, welche Abstützelemente jeweils eine im wesentlichen parallel zur Aussenfläche des Innenrings verlaufende Abstützfläche aufweisen, dass zwischen dem Wickelkopf und den Abstützelementen Spannplatten vorgesehen sind, welche den Wickelkopf gegen die Aussenfläche des Innenringes pressen, und dass zwischen den Spannplatten und den Abstützelementen mit den Nachspannmitteln zusammenwirkende Spannkeile angeordnet sind, welche sich an den Abstützflächen der Abstützelemente abstützen und die Spannplatten gegen den Wickelkopf pressen. Durch Verwendung der Spannkeile können flächig verteilt hohe Spannkräfte aufgebracht werden, die sich auf einfache Weise durch eine lineare Krafteinleitung erzeugen lassen.

Eine zweite bevorzugte Ausführungsform der erfindungsgemässen Maschine zeichnet sich dadurch aus, dass die Spannkeile paarweise auf gegenüberliegenden Seiten der Spannplatten angeordnet sind, dass die Spannkeile eines Paares spiegelbildlich angeordnet sind und durch eine Bewegung aufeinander zu die zugehörige Spannplatte vorspannen, dass die Spannkeile mittels einer gemeinsamen Zugstange aufeinander zu bewegbar sind und zusammen mit der Zugstange eine Spannvorrichtung bilden, dass die Zugstange mit ihrem einen Ende an einem ersten Spannkeil des Paares befestigt ist, dass der zweite Spannkeil des Paares auf der Zugstange beweglich angeordnet ist, und dass eine Vorrichtung vorhanden ist, welche sich an einem Widerlager an der Zugstange abstützt und den zweiten Spannkeil in Richtung auf den ersten Spannkeil verschiebt. Hierdurch lassen sich auf konstruktiv sehr einfache und im Betrieb funktionssichere Weise sehr gleichmässig verteilte Spannkräfte erzeugen und aufrecht erhalten.

Bevorzugt ist die Vorrichtung zum Verschieben des zweiten Spannkeils eine hydraulische Presse, die über eine Druckleitung aus einer ausserhalb des Maschinengehäuses angeordneten Druckversorgung mit dem notwendigen Arbeitsdruck versorgt wird. Die Hydraulik ist unempfindlich gegen hohe Spannungen und Magnetfelder, kann hohe Kräfte erzeugen und lässt sich einfach aus Standardkomponenten zusammenbauen.

### KURZE ERLÄUTERUNG DER FIGUREN

Die Erfindung soll nachfolgend anhand von Ausführungsbeispielen im Zusammenhang mit der Zeichnung näher erläutert werden. Die einzige Figur zeigt in einem Ausschnitt ein bevorzugtes Ausführungsbeispiel für die erfindungsgemässe Wickelkopfverspannung.

### WEGE ZUR AUSFÜHRUNG DER ERFINDUNG

In der Figur ist ein bevorzugtes Ausführungsbeispiel für eine Wickelkopflagerung und -verspannung nach der Erfindung ausschnittweise wiedergegeben. Die elektrische Maschine 10 umfasst im Innenraum 12 eines abgeschlossenen Maschinengehäuses 11 einen (nicht gezeigten), um eine Maschinenachse rotierenden Rotor und einen Stator, der eine durch einen Statorkern 13 laufende Statorwicklung aufweist, von der in der Figur zwei Wicklungsstäbe 26 und 27 dargestellt sind. Die Wicklungsstäbe gehen, aus dem Statorkern 13 kommend, in einen Wickelkopf 31 über, der aus Gründen der mechanischen Stabilität gegenüber den dynamischen Beanspruchungen während des Betriebes verspannt gelagert ist.

Zur Lagerung liegt der sich konisch nach aussen erweiternde Wickelkopf 31, der ein Paket aus den Wicklungsstäben 26, 27 und geeigneten Zwischenlagen 23, 24 und 25 umfasst, auf einem koaxial zur Maschinenachse angeordneten Innenring 32 mit konischer Aussenfläche. Gegen den Innenring 32 verspannt wird der Wickelkopf 31 durch von der anderen Seite auf den Wickelkopf 31 gepresste Spannplatten 28, die jeweils durch Paare von spiegelbildlich zueinander liegenden Spannkeilen 16, 19 mit der notwendigen Spannkraft beaufschlagt werden. Die Spannkeile 16, 19 stützen sich dazu jeweils an parallel zur Aussenfläche des Innenringes 32 orientierten Abstützflächen 15a von Abstützelementen 15 ab, die den Wickelkopf 31 aussen umgeben. Die Abstützelemente 15 sind ihrerseits über geeignete Befestigungsvorrichtungen 14 am Statorkern 13 befestigt.

Die Spannmechanik umfasst neben den Spannkeilen 16, 19 eine Zugstange 18, die durch beide Spannkeile 16, 19 eines Keilpaares hindurchgeht. Am einen Ende der Zugstange 18 ist ein erstes Widerlager 17 vorgesehen, an welchem sich der eine Spannkeil 16 abstützt. Am anderen Ende der Zugstange 18 ist ein zweites Widerlager 22 angeordnet, an welchem sich eine hydraulische Presse 21 abstützt, die mit einem Kolben 20 von hinten gegen den anderen Spannkeil 19 drückt. Die hydraulische Presse 21 wird aus einer ausserhalb des Maschinengehäuses 11 befindlichen Druckversorgung 30 über eine nach innen führende Druckleitung 29 mit Druck versorgt. Durch Anlegen eines entsprechenden Druckes wirken in Verbindung mit der Zugstange 18 Kräfte auf die Spannkeile 16, 19, welche jeweils in Richtung auf den anderen Spannkeil gerichtet sind und aufgrund der Keilwirkung die Spannplatte 28 gegen den Wickelkopf 31 pressen.

Jede der um den Wickelkopf 31 herum angeordneten Spannvorrichtungen kann so über die zugehörige hydraulische Presse schnell und präzise und vor allem individuell auf die gewünschte Vorspannung eingestellt werden, indem ein entsprechender hydraulische Druck angelegt wird. Insbesondere kann während des Betriebs der Maschine die Lagerung nachgespannt werden, ohne dass die Maschine angehalten oder das Maschinengehäuse 11 geöffnet werden muss. Die paarweise Verwendung von Spannkeilen 16, 19 bewirkt dabei im Zusammenhang mit der Spannplatte 28 eine sehr gleichmässige Verteilung der Presskraft. Damit der hydraulische Druck nach Erreichen der gewünschten Verspannung wieder abgesenkt werden kann, ist es zweckmässig und vorteilhaft, die Spannvorrichtung aus den Spannkeilen 16, 19 und der Zugstange mit einen Ratschenmechanismus auszustatten, bei welchem der auf der Zugstange bewegliche Spannkeil 19 nach einer Verschiebung durch die hydraulische Presse 21 derart einrastet, dass bei einer Druckentlastung der hydraulischen Presse die Vorspannung auf das Keilpaar erhalten bleibt.

Es versteht sich von selbst, dass im Rahmen der Erfindung zum Nachspannen neben den hydraulischen auch andere mechanisch, elektrisch oder magnetisch wirkende Mittel eingesetzt werden können. Dabei ist allerdings darauf zu achten, dass diese Mittel auch unter den Bedingungen zuverlässig arbeiten, die während des Betriebs der Maschine herrschen, und im Hinblick auf die Sicherheit des Bedienpersonals unproblematisch sind.

Insgesamt ergibt sich mit der Erfindung eine Maschine mit Wickelkopflagerung, die sich durch folgende Eigenschaften und Vorteile auszeichnet:
- die Wickelkopfabstützung kann mit Hilfe einer externen Vorrichtung ohne die Maschine zu öffnen nachgespannt werden;
- die Nachspannung erfolgt vorzugsweise über eine hydraulische Presse, die von einer externen Druckversorgung mit Druck versorgt wird;
- die Spannvorrichtung ist vorzugsweise mit einem Ratschenmechanismus ausgerüstet, damit auch nach einer Druckentlastung der Presse die Vorspannung auf die zwei Keile und somit auf die ganze Wickelkopfabstützung beibehalten werden kann;
- bei Revisionen ergibt sich eine starke Reduktion der benötigten Zeit;
- das Nachspannen kann sowohl im "Betrieb" als auch im Stillstand durchgeführt werden;
- eine gleichmässige Vorspannung aller Abstützungen ist gewährleistet;
- ein Oeffnen des Generators oder Motors (Verschalungen etc.) ist nicht notwendig;
- eventuelle Anzeichen für einen losen Wickelkopf wie z.B. höhere Vibrationen sowie Abrieb können mit Vibrations-Sensoren im Betrieb sowie mit Endoskopen durch spezielle Oeffnungen im Gehäuse diagnostiziert und durch Nachspannen beseitigt werden;
- das System gemäss der Erfindung ist bei H₂- als auch bei luftgekühlten Generatoren/Motoren anwendbar.

### BEZEICHNUNGSLISTE

- 10: elektrische Maschine (Generator oder Motor)
- 11: Maschinengehäuse
- 12: Innenraum
- 13: Statorkern
- 14: Befestigungsvorrichtung
- 15: Abstützelement
- 15a: Abstützfläche
- 16,19: Spannkeil
- 17,22: Widerlager (Zugstange)
- 18: Zugstange
- 20: Kolben
- 21: hydraulische Presse
- 23,24,25: Zwischenlage
- 26,27: Wicklungsstab
- 28: Spannplatte
- 29: Druckleitung (Hydraulik)
- 30: Druckversorgung (Hydraulik)
- 31: Wickelkopf
- 32: Innenring

## Patentansprüche

1. Elektrische Maschine (10), insbesondere Generator oder Motor, welche elektrische Maschine (10) in einem Maschinengehäuse (11) untergebracht ist und eine durch einen Statorkern (13) hindurchlaufende Statorwicklung umfasst, die stirnseitig in einen Wickelkopf (31) übergeht, welcher zum Auffangen dynamischer Belastungen verspannt gelagert ist,
dadurch gekennzeichnet,
dass an der Wickelkopflagerung Mittel (20, 21, 29, 30) zum Nachspannen des Wickelkopfes (31) vorgesehen sind, welche von ausserhalb des Maschinengehäuses (11) betätigbar sind und ein Nachspannen während des Betriebes ermöglichen.

2. Maschine nach Anspruch 1, dadurch gekennzeichnet, dass der Wickelkopf (31) auf einem koaxial zur Maschinenachse angeordneten Innenring (32) aufliegt, und aussen von am Statorkern (13) befestigten Abstützelementen (15) umgeben ist, welche Abstützelemente (15) jeweils eine im wesentlichen parallel zur Aussenfläche des Innenrings (32) verlaufende Abstützfläche (15a) aufweisen, dass zwischen dem Wickelkopf (31) und den Abstützelementen (15) Spannplatten (28) vorgesehen sind, welche den Wickelkopf (31) gegen die Aussenfläche des Innenringes (32) pressen, und dass zwischen den Spannplatten (28) und den Abstützelementen (15) mit den Nachspannmitteln (20, 21, 29, 30) zusammenwirkende Spannkeile (16, 19) angeordnet sind, welche sich an den Abstützflächen (15a) der Abstützelemente (15) abstützen und die Spannplatten (28) gegen den Wickelkopf (31) pressen.

3. Maschine nach Anspruch 2, dadurch gekennzeichnet, dass die Spannkeile (16, 19) paarweise auf gegenüberliegenden Seiten der Spannplatten (28) angeordnet sind.

4. Maschine nach Anspruch 3, dadurch gekennzeichnet, dass die Spannkeile (16, 19) eines Paares spiegelbildlich angeordnet sind und durch eine Bewegung aufeinander zu die zugehörige Spannplatte (28) vorspannen, und dass die Spannkeile mittels einer gemeinsamen Zugstange (18) aufeinander zu bewegbar sind und zusammen mit der Zugstange (18) eine Spannvorrichtung bilden.

5. Maschine nach Anspruch 4, dadurch gekennzeichnet, dass die Zugstange (18) mit ihrem einen Ende an einem ersten Spannkeil (16) des Paares befestigt ist, dass der zweite Spannkeil (19) des Paares auf der Zugstange (18) beweglich angeordnet ist, und dass eine Vorrichtung (21) vorhanden ist, welche sich an einem Widerlager (22) an der Zugstange (18) abstützt und den zweiten Spannkeil (19) in Richtung auf den ersten Spannkeil verschiebt.

6. Maschine nach Anspruch 5, dadurch gekennzeichnet, dass die Vorrichtung zum Verschieben des zweiten Spannkeils (19) eine hydraulische Presse (21) ist.

7. Maschine nach Anspruch 6, dadurch gekennzeichnet, dass die hydraulische Presse (21) über eine Druckleitung (29) aus einer ausserhalb des Maschinengehäuses (11) angeordneten Druckversorgung (30) mit dem notwendigen Arbeitsdruck versorgt wird.

8. Maschine nach einem der Ansprüche 6 und 7, dadurch gekennzeichnet, dass die Spannvorrichtung (16, 18, 19) einen Ratschenmechanismus umfasst, derart, dass bei einer Druckentlastung der hydraulischen Presse (21) die Vorspannung auf das Keilpaar (16, 19) erhalten bleibt.
